# EUROPEAN PATENT APPLICATION

(11) **EP 2 112 740 A2**
(43) Date of publication of application: **28.10.2009**
(21) Application number: 09158521.6
(22) Date of filing: 22.04.2009
(51) Int. Cl.: H02J 7/00

(54) **Charger for portable devices**

(30) Priority: 22.04.2008 GB 0807317
(71) Applicant: Strax UK Ltd., St. ALbans Hertfordshire AL2 2DQ (GB)
(72) Inventor: Griffith, David, Lee, Apex, NC 27502 (US); Green, Michael, Antonio, London, NW9 5WN (GB); Olafsson, Petur, Hannes, Mongkok Kowloon Hong Kong (CN); Birgisson, Jon, Ottar, St Albans, Hertfordshire AL3 5LN (GB)
(74) Representative: Midgley, Jonathan Lee

(57) **Abstract**

A charger is arranged to switch on automatically when a device, such as a mobile phone, is connected to the charger and switch off automatically when the device is removed from the charger. This is achieved by providing the charger with an interface, for the device to connect to, and a switch. The interface and switch are arranged on the charger such that the switch is depressed when the device is connected to the charger. Depressing the switch causes electricity to flow to the interface and allows the device to be charged.

## Description

This invention relates to a charger for a portable device. The charger can be used, for example, to charge batteries for mobile telephones or MP3 players

Chargers are commonly used to supply energy from an external power source, such as mains electricity, to a battery in a portable device. This allows a portable device, such as a mobile telephone or an MP3 player to be used remotely without connection to a power source.

Conventional chargers continue to draw a standby current from the mains power source even when no device is connected to the charger. It is desirable to minimise the standby current on the mains power source as this is effectively wasted energy.

According to the present invention there is provided a charger for a portable device comprising an interface configured to engage with the portable device for providing power thereto and a switch arranged to control the supply of power to the interface and configured to be closed when the portable device is connected to the interface and be open when the portable device is not connected to the interface.

Preferably the switch is adjacent to the interface so that it is readily activated by the connection of the portable device to the interface.

The charger has a body and preferably the body has a first portion which, in use, is substantially horizontal, having an upper face with the switch being disposed on the upper face. This means that the switch is readily accessible when the charger is connected to a mains supply.

Preferably, in addition to the first portion, the charger also includes a second portion. The second portion being substantially at right angles to the first portion. In use, the second portion is substantially vertical so that the charger forms an L-shaped cradle to receive the portable device.

Alternatively, the charger may have a substantially rectangular body and the switch is formed on the upper surface of the body in use.

The interface and switch are located within a recess configured to receive the portable device. This ensures that the switch is depressed or activated by the portable device.

The charger may have a body. The body having a first portion which, in use, is substantially horizontal, and a second portion which, in use, is substantially vertical, the first and second portions being substantially at right angles to each other; the second portion, in use, including a vertical face with the switch being disposed on the vertical face.

Preferably the charger includes circuitry. The switch may be configured to disconnect all the circuitry within the charger from the supply of power or, alternatively, to only disconnect a charging circuit connected to the interface from the supply of power.

The switch may be a mechanical switch with the portable device depressing the switch when engaged with the interface and releasing the switch when disengaged from the interface. Alternatively, the switch may be a magnetic switch.

Optionally, the switch may be formed within the interface. This reduces the likelihood of objects other than the portable device depressing the switch and also ensures that power is only supplied to the interface when the portable device is fully engaged with the interface. Thereby, further reducing any energy that may be lost.

Other aspects and features of the present invention will become apparent to those ordinarily skilled in the art upon review of the following description of specific embodiments of the invention in conjunction with the accompanying figures.
Figure 1a illustrates a side view of an embodiment of a charger of the present invention;
Figure 1b illustrates a birds eye view of the charger of Figure 1a;
Figure 2a illustrates a side view of the charger in use; and
Figure 2b illustrates a birds eye view of the charger in use.

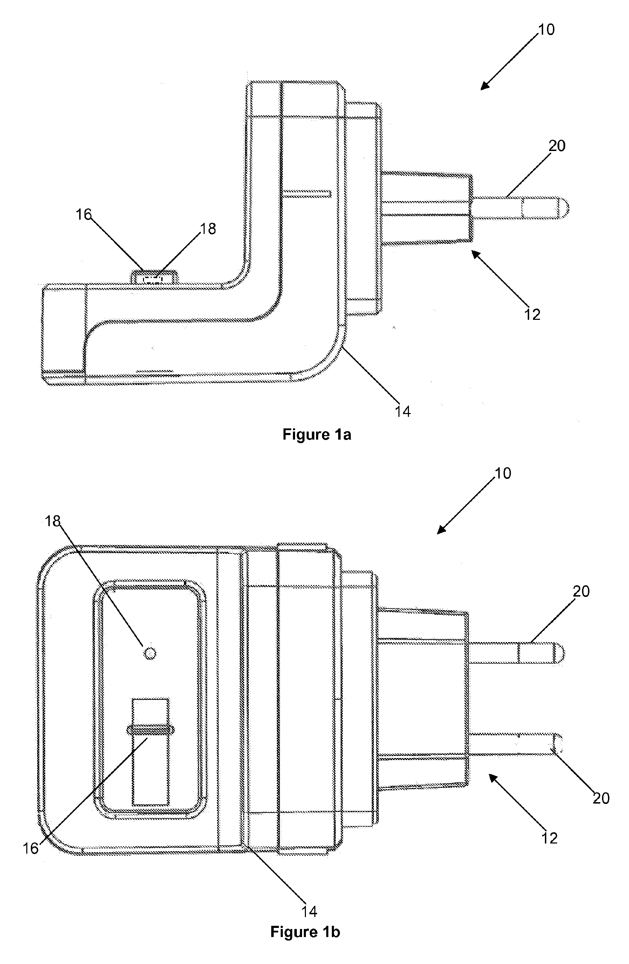

The charger 10, as illustrated in Figures 1a and 1b includes a mains plug 12, a body 14, an interface 16 and a switch 18. The mains plug 12 comprises a pair of conducting pins 20 which extend from one surface of the body 14. The interface 16 may be any interface that is suitable for coupling to a charging port in a device. The interface may be interchangeable. The charging port is any interface in a device that enables energy to be supplied to the battery and therefore allows the battery to be charged.

The body 14 of the charger 10 is in an L shape having an upright portion and a horizontal portion when plugged into a mains outlet socket. The plug 12 is formed on the upright portion of the body 14 and the interface 16 and switch 18 being present on the upper surface of the horizontal portion of the body 14.

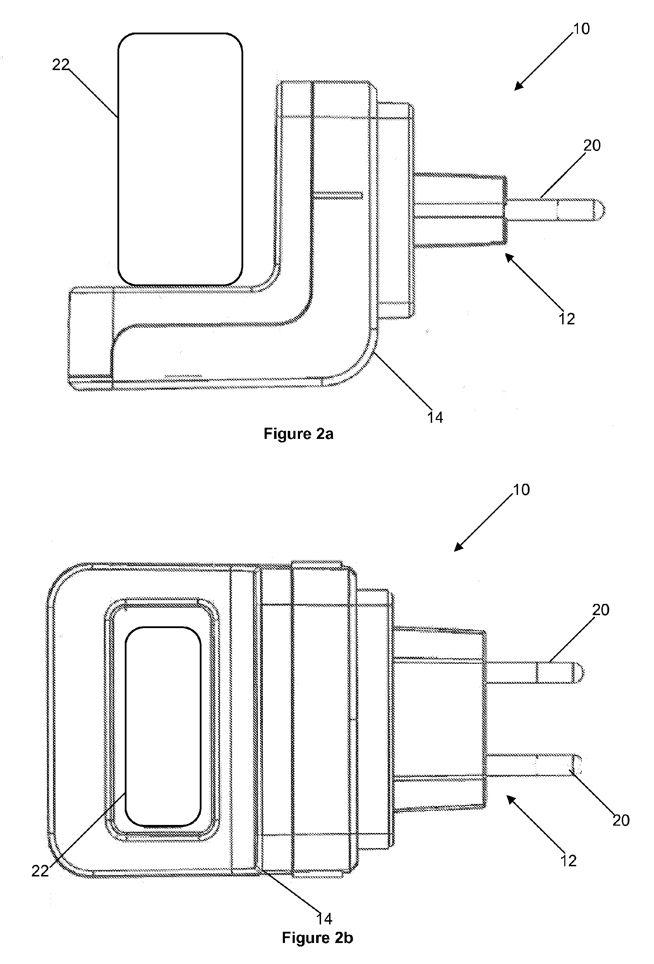

The interface 16 is suitable for connecting to the charging port of an device. The switch 18 is situated adjacent to the interface 16, at such a distance that when a device 22 is connected to the interface 16 the switch 18 is depressed by the device 22 as illustrated in Figures 2a and 2b. The depressing of the switch 18 causes the mains supply to be corrected to the internal charger circuitry allowing power to be drawn from an external power source (not shown), through the circuitry in the charger 10 to the charging port. Thereby the charger output receives power allowing the device 22 to be charged.

When the device 22 is removed, the switch 18 is no longer depressed and returns to the raised position, illustrated in Figures 1a and 1b. In this position the circuitry within the charger is disconnected from the power supply and no electricity is drawn from the external power source.

As will be understood by one skilled in the art, the plug 12 may be of any suitable type. For example, it may be provided with an earth pin, as found in standard UK plugs. Additionally, the plug may be adapted to connect to any power source. The power source may be, for example, mains electricity or some other source of power. For example, the plug may be a 12V plug such as a cigarette lighter type plug.

The body may be of any suitable shape. For example, it may be of rectangular shape with the interface and switch located on the upper surface of the body when the charger is connected to a mains socket.

The interface and switch may not be situated adjacent to each other on the charger as illustrated in the Figures. They may be placed in any suitable configuration that results in the switch being depressed, and therefore electricity being supplied to the charging port, when the device is connected to the device interface. For example the switch may be situated on the upright portion of the charger body that faces the L shape. The device interface being close to the upright wall of the charger and causing a side of the device to depress the switch when it is engaged with the interface.

Optionally the switch and/or interface may be present within a recess in the body. The recess is shaped to receive the portable device. This ensures that the switch and/or interface are protected from external objects that may depress the switch and cause current flow.

The switch may be any suitable switch. Preferably the switch is a mechanical switch or a magnetic switch as these switch types require no current to be drawn from the power source to function. The switch may be external to the interface or alternatively, may be formed within the interface in order that it is activated and allows a current to flowhen the portable device is engaged with the interface.

The switch may prevent current flow from the power source to the charger. Alternatively, the switch may prevent current flow throughout any circuitry present within the charger. For example, it may prevent current flow through circuitry which is connected to the interface herein referred to as charging circuitry. This allows the charger to carry out other functions while reducing the energy lost to the interface.

The device may be, for example, an MP3 player or a mobile telephone.

## Claims

1. A charger for a portable device comprising:
an interface configured to engage with the portable device for providing power thereto, and
a switch arranged to control the supply of power to the interface and configured to be closed when the portable device is connected to the interface and be open when the portable device is not connected to the interface.

2. A charger according to Claim 1 wherein the switch is adjacent to the interface.

3. A charger according to Claim 1 or Claim 2 wherein the charger has a body, the body having a first portion which, in use, is substantially horizontal, having an upper face with the switch being disposed on the upper face.

4. A charger according to Claim 3 further comprising a second portion wherein the first and second portions are substantially at right angles to each other and, in use, the second portion is substantially vertical.

5. A charger according to Claim 3 wherein the charger has a substantially rectangular body and the switch is formed on the upper surface of the body in use.

6. A charger according to any preceding claims wherein the interface and switch are located within a recess configured to receive the portable device.

7. A charger according to any one of Claims 1 to 3 wherein the charger has a body, the body having a first portion which, in use, is substantially horizontal, and a second portion which, in use, is substantially vertical, the first and second portions being substantially at right angles to each other; the second portion, in use, including a vertical face with the switch being disposed on the vertical face.

8. A charger according to any preceding claim wherein the switch is configured to disconnect circuitry within the charger from the supply of power.

9. A charger according to any preceding claim wherein the charger includes a charging circuit connected to the interface wherein the switch is configured to disconnect the charging circuit from the supply of power.

10. A charger according to Claim 1 wherein the switch is a mechanical switch and the portable device depresses the switch when engaged with the interface and releases the switch when disengaged from the interface.

11. A charger according to any one of Claims 1 to 6 wherein the switch is a magnetic switch.

12. A charger according to any preceding claim wherein the switch is integral to the interface.
